# EUROPEAN PATENT SPECIFICATION

(11) **EP 3 573 455 B1**
(45) Date of publication and mention of the grant of the patent: **14.10.2020**
(21) Application number: 17710390.0
(22) Date of filing: 27.01.2017
(51) Int. Cl.: A01K 75/00, E01F 7/04, A01K 61/60

(54) **PROTECTIVE NET COMPRISING HIGHLY RESILIENT LOOPS**
SCHUTZNETZ MIT HOCHBELASTUNGSFÄHIGEN SCHLAUFEN
FILET DE PROTECTION COMPRENANT DES BOUCLES HAUTEMENT RÉSILIENTES

(43) Date of publication of application: 04.12.2019
(73) Proprietor: Officine Maccaferri S.p.A., 40069 Zola Predosa (BO) (IT)
(72) Inventor: FERRAIOLO, Francesco, 40050 Ca' de' Fabbri (BO) (IT)
(74) Representative: Provvisionato, Paolo
(86) International application number: PCT/IB2017/050436
(87) International publication number: WO 2018/138550

(56) References cited:
- WO-A1-03/091502
- AU-A1- 2009 202 800
- AU-A1- 2014 201 866
- US-A1- 2006 144 640

## Description

### Field of the invention

The present invention relates to a highly resilient protective net. The invention has been developed particularly in relation to a highly resilient protective net, of the type comprising a plurality of loops interwoven with each other.

### Technological background

The aquaculture sector, and in particular pisciculture, is of increasingly great economic importance. Cages immersed in open waters are often used for breeding fish. These cages have to be protected from attacks by predators, generally large fish that try to attack and, sometimes successfully, break into the breeding cages, causing considerably financial losses.

Similar protection problems are found in marine areas provided for bathing or for practising water sports (surfing, sailing, water skiing etc.), which can sometimes be frequented by predatory animals that are dangerous for the safety of humans.

In the situations given above as examples, and in other similar situations, protective nets are provided for preventing predators from accessing protected areas. These nets must have good characteristics of resistance to corrosion, since they remain constantly immersed in water. They must also have good characteristics of strength so as to withstand collisions and impacts, sometimes considerable, from predators that charge against them in an attempt to reach their potential prey.

AU 2009202800 discloses a mesh which can be used in underwater locations to separate marine animals, for example a shark net. The mesh is formed of overlapping rings cut from tyres and joined at crossing locations. Each ring is crossing across at least two separate locations of a portion of an adjacent ring.

AU 2014201866 discloses a fish stock protection system with including a frame structure having a buoyantì inner ring and a buoyant outer ring connected by a plurality of connectors. A rail assembly is connected to each connector and supports a stock containment net which is suspended in a space surrounded by the inner ring. A predator net assembly is also connected to the connectors to support a predator net which is spaced from and suspended about the stock containment net.

There are known protective nets made with interwoven loops made from steel wire. These known nets are used for absorbing the kinetic energy produced, for example, by the impact of avalanches or rockfalls. A net of this type is described in document EP 0370945. These nets comprising steel wire loops are poorly suited to use in water, because, over time, they tend to oxidise and therefore their resistance to impact is reduced. This drawback can have rather serious consequences considering that the weakening of even just a few loops of the net could compromise the strength of the whole net and therefore the protection provided. Another drawback of known nets is their poor resilience, because of which the net suffers permanent deformation after any impact of a certain magnitude. A very deformed net runs a greater risk of gaps or easier break points being created in some of areas thereof than in an intact net.

WO 03/091502 discloses a safety barrier comprising a net which is made from circular meshes which are interweaved together such that each mesh is interweaved with at least four other adjacent meshes. Each mesh consists of a cable comprising a number of twisted yarns. The cable forming each mesh comprises a single strand which is looped back on itself a number of times in a helical manner.

US 2006/0144640 discloses a safety net especially for rockfall or avalanche baffle works. The net is made of several intermeshing rings. Each ring is made of a wire which is passed several times through two elements, each provided with a through-opening and fully enclosed, until the through-opening is more or less filled with wires.

The object of the present invention is to solve the problems of the prior art and in particular to provide a protective net that has long-lasting strength, without the risk of unwanted gaps being opened or any weakening, even localised, occurring, for example because of oxidation or violent, repeated impacts. Another object of the invention is to provide a protective net that is easy and economical to produce.

### Summary of the invention

To achieve the above-mentioned objects, the invention relates to a protective net as defined in claim 1. Preferred embodiments are defined in the dependent claims.

According to one aspect, a protective net is described, which is formed of individual loops of plastics material threaded into each other. The use of plastics material to produce the loops allows the net to be immersed in water for very long periods without deteriorating. Such a net is therefore ideal for applications in which known protective nets comprising steel loops could not be used. For example, the protective net described can be used in the aquaculture sector to produce breeding cages or barriers for protection against predators.

Such a net, although developed mainly for use in water with an anti-breach function, for example in the aquaculture sector, is, however, not limited to this use. Its use can in fact also extend to other sectors in which its features are preferable or advantageous. For example, the protective net described here has the advantage of being much lighter than a protective net comprising steel loops, so much so that its use, for example, is advantageous also for protection against avalanches and rockfalls, where the transport and installation of a heavy protective net such as one comprising steel loops is inconvenient, dangerous or very difficult.

According to a particular aspect, the plastics material of the protective net has a modulus of elasticity of between approximately 5000 and approximately 20000 MPa. Such a protective net exhibits a remarkable capacity for deformation and springback to its initial shape, which allows it to absorb considerable impacts without entering the region of plastic deformation. This resilient behaviour of the net is much better suited to anti-breach protective nets in the aquaculture sector than that of known steel nets, whose modulus of elasticity is typically of a greater order of magnitude. The springback of the net to its initial shape reduces the risk of gaps or easier break points being generated in some of its areas.

Each loop of the protective net is formed by a thread of plastics material wrapped repeatedly over itself. It is thus possible to easily change the strength of the protective net by increasing or decreasing the number of times the thread of plastics material used is turned (or twisted) to form each individual loop. Therefore, by means of a plastics thread having a single diameter, it is possible to produce protective nets having different strengths. This leads to good efficiency in producing or in obtaining the thread of plastics material. Furthermore, the diameter of the plastics thread can be optimised depending on the diameter of the loop to be produced. For example, a finer and more flexible thread can be used for producing smaller-diameter loops, which can be made stronger by increasing the number of turns of the thread, thus compensating for its small dimensions. Preferably, the thread of plastics material of each loop is wrapped over itself from 5 to 20 times. Preferably, the thread has a diameter of between approximately 1.5 mm and approximately 3.0 mm. Preferably, each loop has a diameter of between approximately 100 mm and 500 mm, and preferably between 300 mm and 450 mm. These loop dimensions have proven effective for use in anti-breach protective nets, for example in the marine aquaculture sector.

According to a non-claimed example, the two ends of the thread of each loop are secured by clamps. In this way, a loop of stable, strong net is produced simply, after the thread has been wrapped over itself the desired number of times. Preferably, the ends of the thread are placed side by side over a sufficiently long length for the application of at least two clamps spaced apart from each other. A fastening of this type is particularly simple and secure. According to the invention, the two ends of the thread are fastened by welding, for example by heat welding.

According to another particular aspect, the inner loops of the net are interwoven with at least another three adjacent loops. A configuration in which the inner loops are interwoven with three or four adjacent loops has proven particularly effective and simple to produce.

According to another particular aspect, the protective net can comprise homogeneous groups of loops having the same characteristics as each other. Each homogeneous group of loops can have different characteristics from the loops of another homogeneous group of loops, in terms of material, strength or diameter.

The net described can be used in an aquaculture installation, comprising a closed cage for breeding fish, molluscs and the like. The net described can be placed around at least part of the closed cage for anti-breach protection.

### Brief description of the drawings

Further features and advantages can be found in the detailed description of a preferred embodiment, with reference to the attached drawings, given by way of non-restrictive example, in which:
- Fig. 1 is a view of a portion of a protective net incorporating features of the present invention;

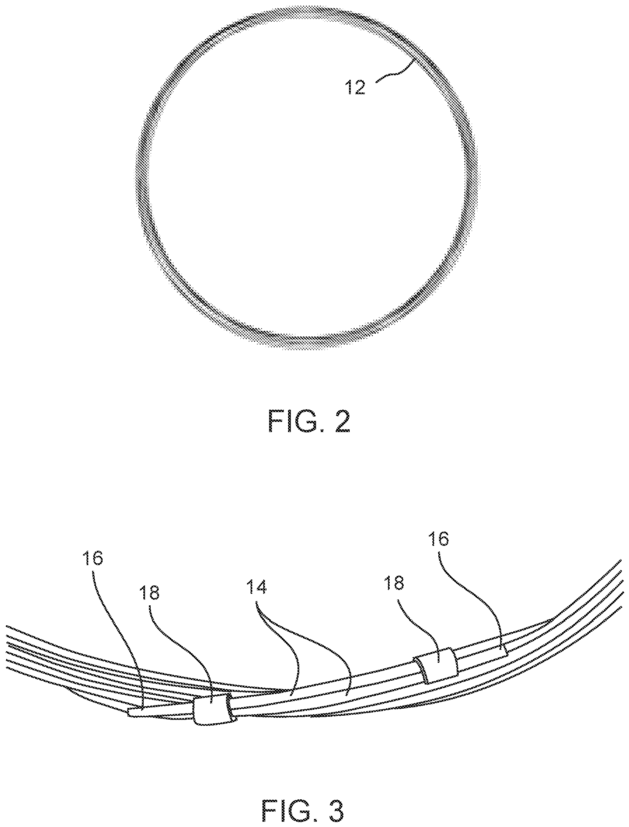

- Fig. 2 is an enlarged view of an individual loop of the protective net in Fig. 1;
- Fig. 3 is an enlarged view of a detail of the loop in Fig. 2; and
- Fig. 4 is a schematic view of an aquaculture installation protected by the protective net in Fig. 1.

### Detailed description

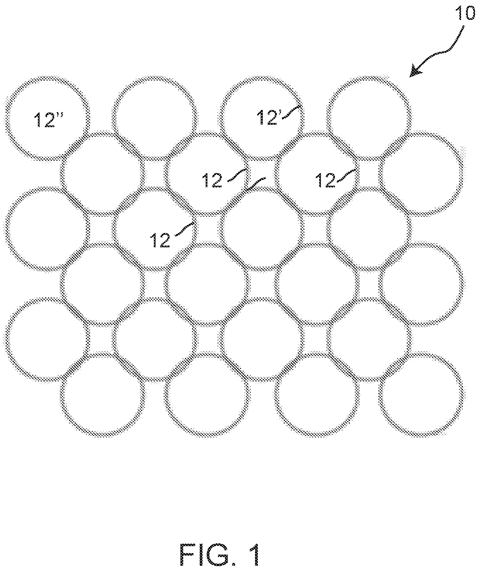

With reference now to Fig. 1, a protective net 10 is formed of individual loops 12 that are threaded into each other.

In the example in Fig. 1, each inner loop of the net 12 can be threaded into four adjacent loops 12. It is possible to produce a protective net 10 in which each inner loop is threaded through a different number of adjacent loops, for example three adjacent loops, so as to produce a net with a different geometry from that illustrated in Fig. 1. The edge loops 12' and the corner loops 12" of the protective net 10 can be threaded into a smaller number of other loops than the inner loops 12. One or more peripheral ropes or a bar (not illustrated) can be threaded into the edge loops 12' and into the corner loops 12".

Each loop 12 is formed of a thread 14 of plastics material. The thread 14 of plastics material is wrapped repeatedly over itself so as to form a certain number of turns, bends or twists. In some applications, the thread 14 of each loop 12, 12' 12" can be wrapped over itself between five and twenty times. The number of thread turns for each loop can also be smaller or greater, depending on the characteristics of the thread 14 and therefore the desired strength to be imparted to each loop 12, 12', 12". The number of thread turns 14 can also be different for some loops or for some groups of loops.

The thread 14 can be a thread or monofilament of polyethylene terephthalate (PET), or some other plastics material. The thread 14 can be made of a plastics material having a modulus of elasticity of between approximately 5000 and approximately 20000 MPa. In some applications the thread 14 can have a minimum tensile strength of 230 MPa. The diameter of the thread 14 can be selected on the basis of the strength characteristics to be imparted to the protective net 10. In some applications, the thread 14 of plastics material can have a diameter of between approximately 1.5 mm and approximately 3.0 mm. In one non-restrictive example the thread 14 can have a nominal diameter of 3 mm.

In a non-claimed example, the two ends 16 of the thread 14 of each loop 12, 12', 12" can be secured by clamps 18 or by fastening members having a similar function. In particular, the ends 16 of the thread 14 can be placed side by side over a sufficiently long length x for the application of at least two clamps 18, which can preferably be spaced apart from each other. The ends 16 of the thread 14 are fastened, according to the invention, by welding, for example heat welding.

The loops 12, 12', 12" can be generally circular in shape. The diameter of the loops 12, 12', 12" can be selected according to the usage needs of the protective net 10. Simply by way of example, in the case of anti-breach protective nets used to protect aquaculture installations, the loops 12, 12', 12" can have a diameter of between approximately 100 mm and 500 mm, and preferably between 300 mm and 450 mm. The production of a protective net comprising loops of a different diameter from the values shown is not, however, ruled out. In some applications a protective net can be produced having loops or groups of loops that have different dimensions from each other. The dimensions of the loops 12, 12', 12" can be determined so as to take account of the conditions of use of the protective net 10, and in particular the dimensions of the smallest body that might create an impact on the protective net and from which protection is to be provided.

To produce the protective net 10, loops 12, 12', 12" are formed by wrapping a plastics thread 14 repeatedly over itself a given number of times in order to form a loop of a given diameter. At each turn over itself, the plastics thread 14 can be threaded into a certain number, e.g. three or four, of adjacent loops 12, 12' or 12" already formed.

After the thread 14 of plastics material has been wrapped over itself by the given number of turns, its two ends 16 are fastened. The two ends 16 can, for example, be placed side by side and aligned relative to each other. The two ends 16 can be fastened to each other and/or to one or more of the turns of the thread 14 that form the loop 12, 12', 12". The two ends 16 are fastened by welding, for example heat welding.

Preferably, the protective net can be produced and supplied in the form of panels of net, of predetermined dimensions, comprising a pre-set number of loops 12 both lengthways and widthways. The edge loops 12' and the corner loops 12" can be connected together by one or more peripheral ropes or bars (not illustrated). The panels of protective net 10 produced in this way can be used individually or can be assembled to produce protective structures of various kinds.

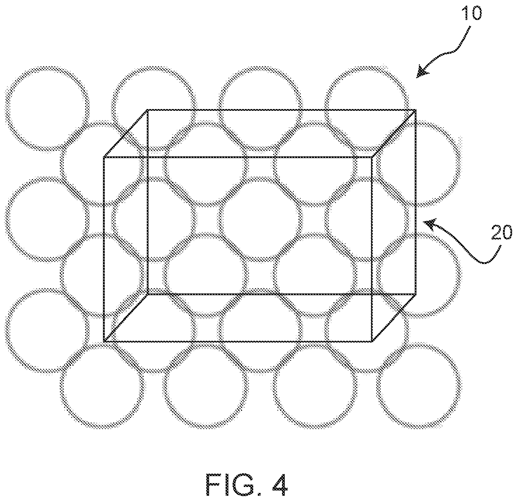

Fig. 4 schematically illustrates a non-restrictive example of the use of a protective net 10 in an aquaculture installation. The aquaculture installation comprises a cage 20 of a generally known type, for example produced having a close-mesh net made of plastics, nylon or the like, which can be used for breeding aquatic organisms such as fish, molluscs, crustaceans, etc. A protective net 10, having highly resilient loops, of the type described above is fastened a predetermined distance away from the cage 20. The protective net 10 is held in position by systems known in the aquaculture sector, for example by anchors (not illustrated). The protective net 10 can extend so as to cover the whole cage 20 or only the part of the cage 20 that is to be protected, for example, from possible attacks by predators, with an anti-breach function. In the case of impact on the protective net 10 by a predator, the protective net 10 is deformed locally, so as to absorb the energy of impact, warding off the predator. Once the impact has ended, the high resilience of the protective net 10 allows it to return to its non-deformed condition, sufficiently far away from the cage 20 for anti-breach protection. The protective net 10 maintains its characteristics over time owing to its high resilience and to the fact that it is made of a plastics material that is not subject to oxidation.

Another example of using the protective net 10 described above is for protection against the risk of avalanches and rockfalls. The protective net 10 is secured to the ground in a manner known in the sector, for example by anchors in the ground. Alternatively, the protective net 10 can be held in an erect position by stakes fixed in the ground. In uses of this type, the protective net 10 can easily be transported and installed, even in inaccessible locations, because it is lighter than known protective nets made of steel.

## Claims

1. Protective net formed of individual loops (12, 12', 12") of plastics material threaded into each other, wherein each loop (12, 12', 12") is formed by a thread (14) of plastics material wrapped repeatedly over itself, said protective net being **characterized in that** ends (16) of the thread (14) of each loop (12, 12', 12") are secured by welding.

2. Protective net according to claim 1, wherein the ends (16) of the thread (14) of each loop (12, 12', 12") are secured by heat welding.

3. Protective net according to claim 1 or claim 2, wherein the plastics material has a modulus of elasticity of between approximately 5000 and approximately 20000 MPa.

4. Protective net according to any one of the preceding claims, wherein the thread (14) of plastics material of each loop (12, 12' 12") is wrapped over itself between five and twenty times.

5. Protective net according to any one of the preceding claims, wherein the thread (14) has a diameter of between approximately 1.5 mm and approximately 3.0 mm.

6. Protective net according to any one of the preceding claims, wherein each loop (12, 12', 12") has a diameter of between approximately 100 mm and 500 mm, and preferably between 300 mm and 450 mm.

7. Protective net according to any one of the preceding claims, wherein inner loops (12) of the net (10) are interwoven with at least another three adjacent loops.

8. Protective net according to claim 7, wherein the inner loops (12) of the net (10) are interwoven with three or four adjacent loops.

9. Protective net according to any one of the preceding claims, comprising homogeneous groups of loops (12, 12', 12") having the same characteristics as each other, each homogeneous group of loops having different characteristics from the loops of another homogeneous group of loops, in terms of material, strength and/or diameter.

10. Aquaculture installation, comprising a cage (20) for breeding aquatic organisms, further comprising a protective net (10) according to any one of claims 1 to 9 arranged around at least part of the cage (20) for the purpose of anti-breach protection.

## Patentansprüche

1. Schutznetz, das aus individuellen Schlaufen (12, 12', 12") aus Kunststoffmaterial gebildet ist, die ineinander gefädelt sind, wobei jede Schlaufe (12, 12', 12") durch einen Faden (14) aus Kunststoffmaterial gebildet ist, der wiederholt um sich selbst gewickelt wurde, wobei das Schutznetz **dadurch gekennzeichnet ist, dass** Enden (16) des Fadens (14) von jeder Schlaufe (12, 12', 12") durch Schweißen gesichert sind.

2. Schutznetz nach Anspruch 1, wobei die Enden (16) des Fadens (14) von jeder Schlaufe (12, 12', 12") mittels Wärmeschweißen gesichert sind.

3. Schutznetz nach Anspruch 1 oder Anspruch 2, wobei das Kunststoffmaterial einen Elastizitätsmodul zwischen annähernd 5000 und annähernd 20000 MPa aufweist.

4. Schutznetz nach einem der vorhergehenden Ansprüche, wobei der Faden (14) aus Kunststoffmaterial von jeder Schlaufe (12, 12', 12") zwischen fünf und zwanzig Mal um sich selbst gewickelt ist.

5. Schutznetz nach einem der vorhergehenden Ansprüche, wobei der Faden (14) einen Durchmesser zwischen annähernd 1,5 mm und annähernd 3,0 mm aufweist.

6. Schutznetz nach einem der vorhergehenden Ansprüche, wobei jede Schlaufe (12, 12', 12") einen Durchmesser zwischen annähernd 100 mm und 500 mm und vorzugsweise zwischen 300 mm und 450 mm aufweist.

7. Schutznetz nach einem der vorhergehenden Ansprüche, wobei die inneren Schlaufen (12) des Netzes (10) mit mindestens drei weiteren benachbarten Schlaufen verwoben sind.

8. Schutznetz nach Anspruch 7, wobei die inneren Schlaufen (12) des Netzes (10) mit drei oder vier benachbarten Schlaufen verwoben sind.

9. Schutznetz nach einem der vorhergehenden Ansprüche, umfassend homogene Gruppen von Schlaufen (12, 12', 12") mit jeweils denselben Charakteristika, wobei jede homogene Gruppe von Schlaufen andere Charakteristika als die Schlaufen einer anderen homogenen Gruppe von Schlaufen in Bezug auf Material, Festigkeit und/oder Durchmesser aufweist.

10. Aquakulturanlage, umfassend einen Käfig (20) zum Züchten von Wasserorganismen, des Weiteren umfassend ein Schutznetz (10) gemäß einem der Ansprüche 1 bis 9, das zum Zweck eines Überwindungsschutzes um mindestens einen Teil des Käfigs (20) herum angeordnet ist.

## Revendications

1. Filet de protection formé avec des boucles individuelles (12, 12', 12") en matière plastique passées les unes dans les autres, dans lequel chaque boucle (12, 12', 12") est formée par un fil (14) en matière plastique enroulé à plusieurs reprises sur lui-même, ledit filet de protection étant **caractérisé en ce que** les extrémités (16) du fil (14) de chaque boucle (12, 12', 12") sont fixées par soudage.

2. Filet de protection selon la revendication 1, dans lequel les extrémités (16) du fil (14) de chaque boucle (12, 12', 12") sont fixées par thermosoudage.

3. Filet de protection selon la revendication 1 ou la revendication 2, dans lequel la matière plastique a un module d'élasticité compris entre approximativement 5000 et approximativement 20000 MPa.

4. Filet de protection selon l'une quelconque des revendications précédentes, dans lequel le fil (14) en matière plastique de chaque boucle (12, 12', 12") est enroulé sur lui-même entre cinq et vingt fois.

5. Filet de protection selon l'une des revendications précédentes, dans lequel le fil (14) a un diamètre compris entre approximativement 1,5 mm et approximativement 3,0 mm.

6. Filet de protection selon l'une quelconque des revendications précédentes, dans lequel chaque boucle (12, 12', 12") a un diamètre compris entre approximativement 100 mm et 500 mm, et de préférence entre 300 mm et 450 mm.

7. Filet de protection selon l'une quelconque des revendications précédentes, dans lequel les boucles internes (12) du filet (10) sont entrelacées avec au moins trois autres boucles adjacentes.

8. Filet de protection selon la revendication 7, dans lequel les boucles internes (12) du filet (10) sont entrelacées avec trois ou quatre boucles adjacentes.

9. Filet de protection selon l'une quelconque des revendications précédentes, comprenant des groupes homogènes de boucles (12, 12', 12") ayant les mêmes caractéristiques les unes par rapport aux autres, chaque groupe homogène de boucles ayant des caractéristiques différentes des boucles d'un autre groupe homogène de boucles, en termes de matériau, de résistance et/ou de diamètre.

10. Installation d'aquaculture, comprenant une cage (20) pour élever des organismes aquatiques, comprenant en outre un filet de protection (10) selon l'une quelconque des revendications 1 à 9, agencé autour d'au moins une partie de la cage (20) à des fins de protection incassable.
